(19) Europäisches Patentamt
European Patent Office
Office européen des brevets

(11) **EP 2 833 315 B1**

(12) **EUROPÄISCHE PATENTSCHRIFT**

(45) Veröffentlichungstag und Bekanntmachung des Hinweises auf die Patenterteilung:
**07.11.2018 Patentblatt 2018/45**

(51) Int Cl.:
***G06T 3/00*** *(2006.01)* ***G06T 7/30*** *(2017.01)*

(21) Anmeldenummer: **13003783.1**

(22) Anmeldetag: **30.07.2013**

(54) **Verfahren zur reproduzierbaren Transformation von digitalen Bildinhalten**

Method for the reproducible transformation of digital image contents

Procédé destiné à la transformation reproductible de contenus d'image numériques

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.02.2015 Patentblatt 2015/06**

(73) Patentinhaber: **KiNETiK Gesellschaft für Informationstechnik mbH**
**95444 Bayreuth (DE)**

(72) Erfinder: **Kurzac, Andreas**
**95517 Emtmannsberg (DE)**

(74) Vertreter: **Castell, Klaus et al**
**Patentanwaltskanzlei**
**Liermann-Castell**
**Am Rurufer 2**
**52349 Düren (DE)**

(56) Entgegenhaltungen:
**US-A1- 2003 175 602    US-A1- 2008 062 164**
**US-A1- 2009 154 822**

• RICOLFE-VIALA C ET AL: "Robust metric calibration of non-linear camera lens distortion", PATTERN RECOGNITION, ELSEVIER, GB, Bd. 43, Nr. 4, April 2010 (2010-04), Seiten 1688-1699, XP026870028, ISSN: 0031-3203 [gefunden am 2009-11-07]
• Joaquim Salvi ET AL: "A state of the art in structured light patterns for surface profilometry", Pattern Recognition, vol. 43, no. 8, 1 August 2010 (2010-08-01) , pages 2666-2680, XP055146133, ISSN: 0031-3203, DOI: 10.1016/j.patcog.2010.03.004
• GRIFFIN P M ET AL: "GENERATION OF UNIQUELY ENCODED LIGHT PATTERNS FOR RANGE DATA ACQUISITION", PATTERN RECOGNITION, ELSEVIER, GB, vol. 25, no. 6, 1 June 1992 (1992-06-01), pages 609-616, XP000290629, ISSN: 0031-3203, DOI: 10.1016/0031-3203(92)90078-W

Printed by Jouve, 75001 PARIS (FR)

**Beschreibung**

Die Erfindung betrifft ein Verfahren zur reproduzierbaren Transformation von digitalen Bildinhalten sowie eine dazu korrespondierende Vorrichtung zur Ausgabe von transformierten Bildern.

Zur Präsentation von Produkten im Internet, auf einem Bildschirm oder auf einem Druckträger, wie zum Beispiel ein Katalog oder eine Verkaufsliste, wobei die Produkte in gleicher dreidimensionaler Form, aber mit verschiedenen Mustern oder Gestaltungen angeboten werden, ist es üblich, die unterschiedlichen Gestaltungen so ähnlich wie möglich abzubilden, damit der Gestaltungsunterschied zwischen ansonsten identischen Bedingungen möglichst einfach zu erkennen ist. Beispielhaft hierzu ist die Präsentation eines Polstermöbels, das mit einer Vielzahl von Mustern lieferbar ist. Um zu vermeiden, dass eine Vielzahl von unterschiedlichen Polstermöbeln mit identischen Belichtungen fotografiert werden muss, ist es üblich, ein Polstermöbel mit einem neutralen Bezug in einer ideal ausgeleuchteten Szene zu fotografieren und erst nachträglich ein Muster auf das neutrale Sofa zu projizieren. Bei der Projektion eines Polstermusters ist es jedoch notwendig, dass das Muster entsprechend der dreidimensionalen Form auf das Polstermöbel projiziert wird, damit das Muster möglichst realistisch abgebildet wird, so wie es sich einem Betrachter der Szene aus der Kameraperspektive mit dem neutralen Bezug in der realen Welt präsentieren würde.

Ein ähnliches Verfahren ist bekannt bei der Präsentation von Bekleidungsstücken mit unterschiedlicher Farbe. Bei Bekleidungsstücken ist die nahezu identische Abbildung verschiedener, gleichartiger Bekleidungsstücke kaum noch möglich, weil jedes individuelle Bekleidungsstück geringfügig anders fällt und andere Falten aufwirft.

Schließlich ist es bekannt, individualisierte Waren an einem Kiosk zu bestellen, wie beispielsweise Tassen mit einem individuellen Fotoaufdruck. Die Möglichkeit der Aufbringung von individuellen Mustern auf dreidimensionale Objekte ist schier unendlich, gleich bleibt jedoch das Problem der Darstellung der Projektion verschiedener vorgewählter Muster oder gar individueller Muster als Vorschau auf das dreidimensionale Produkt. Wenn ein Foto oder ein individuell gestaltetes Muster in einer dreidimensionalen Szene abgebildet werden soll, ergibt sich das Problem der räumlichen Transformation des individuellen Musters auf das dreidimensionale Objekt in der Vorschau-Ansicht. Eine noch recht einfache Anwendung ist beispielsweise die Darstellung eines individuellen Posters, das als Bild von einem Kunden übergeben wird, in einer beispielhaften Raum-Szene, wobei das vom Kunden übergebene Bild in die dreidimensionale Szene eingeblendet wird mit der zu der beispielhaften Szene korrespondierenden Verzerrung. Ein anderes Beispiel ist die Abbildung eines vom Kunden übergebenen Bildes oder Logos, das zur Vorschau auf einem T-Shirt mit natürlichen Falten und Verwerfungen dargestellt wird, um so einen möglichst realistischen Eindruck des T-Shirts mit Aufdruck zu erhalten.

Da die vorgewählte realistische Szene ebenso individuell ist, wie das auf die individuelle Szene zu projizierende Bild oder Muster, ist es notwendig, ein Verfahren zur reproduzierbaren Transformation von digitalen Bildinhalten zur Verfügung zu haben.

Um ein zweidimensionales Bild zu transformieren, ist es möglich, das Bild durch Verzerrungsalgorithmen, die auf Hüllkurven oder auf Bezierkurven basieren, rechnerisch zu verzerren. Dazu ist jedoch die Kenntnis und exakte Verfahren des Verzerrungsalgorithmus notwendig. Manche Verzerrungen können durch einfache Trapezverzerrung erzeugt werden, wie beispielsweise die Darstellung eines Posters in einer Wandszene. Andere Verzerrungen, wie beispielsweise die Verzerrung eines Musters zur Projektion dieses Musters auf ein T-Shirt oder auf ein Polstermöbel, setzen ein individuelles dreidimensionales Modell des T-Shirts oder des Polstermöbels voraus, mit dem das Muster transformiert wird. Die Reproduktion der Verzerrung bei manuellen Anpassungen des zweidimensionalen Musters auf eine dreidimensionale Form kann daran scheitern, dass die Abfolge der Transformationen vom Gestalter nicht exakt reproduziert werden kann.

Allgemein ist es möglich, ein zweidimensionales Objekt, hier ein zweidimensionales Bild oder ein zweidimensionales Muster durch eine affine Abbildung zu transformieren gemäß:

$$\widehat{V}_{n,m} = \widehat{T}_{n,n} * \widehat{B}_{n,m}$$

wobei

$\widehat{B}_{n,m}$      zu transformierendes Bild, als n*m-Matrix

$\widehat{T}_{n,n}$      Transformationsoperator, als n*n-Matrix

$\widehat{V}_{n,m}$      transformiertes Bild, als n*m-Matrix

Um den Transformationsoperator $\widehat{T}_{n,n}$ zu finden, ist es möglich, ein nicht transformiertes Bild $\widehat{B}_{n,m}$, beispielsweise ein individuelles Bild oder in individuelles Muster, und ein nach erfolgter einmaliger Transformation erzeugtes Bild $\widehat{V}_{n,m}$, sei es manuell oder durch komplexe dreidimensionale Modelle erzeugt, wie folgt miteinander zu verknüpfen:

$$\widehat{T}_{n,n} = \widehat{V}_{n,m} * \widehat{B^{-1}}_{m,n}$$

Hierzu ist es jedoch notwendig, das nicht transformierte Bild $\widehat{B}_{n,m}$ als Matrix mathematisch zu invertieren. Bei rechteckigen Bildern, für die also n ungleich m ist, oder für große Bilder mit Kantenlängen von mehr als 1.000 Bildpunkten ist eine solche Matrixinversion entweder nicht trivial, nicht eindeutig (Determinante gleich null), oder mit nur sehr erheblichem Rechenaufwand zu ermitteln. Dabei ist der Aufwand zur Ermittlung und die Erfolgsaussicht zur Ermittlung des invertierten Bildes

$\widehat{B^{-1}}_{m,n}$ sehr stark abhängig vom Bildinhalt.

Aus der Druckschrift US 2009/154822 A1 ist ein Verfahren zur Korrektur von Verzerrungsfehlern bei Aufnahmen mittels Kameralinsen bekannt. Basis für die rechnerische Bildkorrektur sind die Verzerrungsinformationen, die insbesondere anhand der Verzerrung von gitterartigen Testbildern gewonnen werden. Dabei werden über einen Zwischenschritt Interpolationsfunktionen gesucht, um mit Hilfe der Interpolationsfunktion die Bilder zu entzerren, in dem die Interpolationsfunktion die Bildpunkte des verzerrten Bildes dem entzerrten Bild zuordnet.

In Druckschrift US 2008/062164 A1 ein ähnliches Verfahren für die Kalibrierung von Projektionsgeräten beschrieben. Auch nach dieser Druckschrift werden über einen Zwischenschritt Interpolationsfunktionen gesucht, um mit Hilfe der Interpolationsfunktion die Bilder zu entzerren, in dem die Interpolationsfunktion die Bildpunkte des verzerrten Bildes dem entzerrten Bild zuordnet.

Aufgabe der Erfindung ist es deshalb, ein Verfahren zur reproduzierbaren Transformation von digitalen Bildinhalten und eine dazu korrespondierende Vorrichtung zur Verfügung zu stellen, welche die eingangs erwähnten Probleme überwindet.

Die der Erfindung zu Grunde liegende Aufgabe wird gelöst durch ein Verfahren nach den Ansprüchen 1 bis 6. Eine dazu korrespondierende Vorrichtung wird in Anspruch 7 angegeben.

Nach dem Gedanken der Erfindung ist vorgesehen, dass ein speziell präpariertes Bild als Vorlage für eine Verzerrung dient. Hierzu wird in diesem digitalen Bild der Bildinhalt so gewählt, dass jeder einzelne Bildpunkt einen in dem digitalen Bild einmalig vorkommenden Wert aufweist. Bei derzeit üblichen RGB-Farbräumen (RGB für Rot, Grün, Blau) von 3 * 8 bit, also 8 bit pro Farbe, ergibt dies eine maximale Bildpunkte-Anzahl von $2^{24}$ = ca. 16,7 Mio. Bildpunkten oder ca. 4.700 Bildpunkte mal 3.500 Bildpunkte bei einem Seitenverhältnis des nicht transformierten Bildes von 4:3. Um die mögliche Bildgröße noch zu erhöhen, kann auch ein CMYK-Modell (Cyan, Magenta, Yellow=gelb, Key=Schwarz) gewählt werden, das vier 8 bit-Kanäle zur Verfügung stellt, und somit eine maximale Anzahl von $2^{32}$ Bildpunkten oder ca. 75.674 Bildpunkte mal 56.755 Bildpunkte bei einem Seitenverhältnis von 4:3 zur Verfügung stellt und damit selbst bei einer Auflösung von 300 Punkten pro Zoll (118 Punkten pro cm) immer noch eine Seitenlänge von 6 m erlaubt.

Das so speziell vorbereitete Bild als Referenzbild wird einmalig der identischen Transformation unterworfen, wie ein zu transformierendes Bild. Es wird also das Referenzbild mit einem individuellen und einzigartigem numerischen Parameter pro einzelnem Bildpunkt so transformiert, wie ein Muster transformiert wird, das auf einen dreidimensionalen Gegenstand projiziert werden soll. Dieses virtuelle transformierte Referenzbild mit einem individuellen und einzigartigem numerischen Parameter pro einzelnem Bildpunkt dient als Referenz für die örtliche Verschiebung eines jeden einzelnen Bildpunktes des nicht transformierten Bildes. Im einfachsten Fall wird für jeden einzelnen Bildpunkt im nicht transformierten Referenzbild der Ort im transformierten Referenzbild gesucht und in einem zu transformierenden Bild, beispielsweise ein zu projizierendes Muster, wird der Bildpunkt im nicht transformierten Muster an den Ort verschoben, der durch die Suche zwischen nicht transformiertem Referenzbild und transformiertem Referenzbild ermittelt wurde. Erfindungsgemäß ist das Verfahren zur reproduzierbaren Transformation von digitalen Bildinhalten also wie folgt aufgebaut: Bereitstellen eines Referenz-Bildinhaltes mit einem individuellen und einzigartigem numerischen Parameter pro einzelnem Bildpunkt, Empfangen des Referenz-Bildinhalts, welches mit beliebiger Transformationswirkung an anderer Stelle transformiert wurde, Transformieren eines reproduzierbar zu transformierenden Bildinhaltes, wobei zur Transformation eines jeden einzelnen Bildpunktes des reproduzierbar zu transformierenden Bildinhaltes der individuelle und einzigartige numerische Parameter aus dem nicht transformierten Referenz-Bildinhalt mit gleicher Position wie der Bildpunkt des reproduzierbar zu transformierenden Bildinhaltes ausgelesen und seine Position im transformierten Referenz-Bildinhalt gesucht wird, und der Bildpunkt des reproduzierbar zu transformierenden Bildinhaltes an der Stelle positioniert wird, wo im transformierten Referenz-Bildinhalt die Position des einzigartigen numerischen Parameters im transformierten Referenz-Bildinhalt gefunden wurde. Vereinfacht ausgedrückt basiert das Verfahren auf einer Transformation eines Bildes, indem jeder einzelne Bildpunkt im nicht transformierten Bild über seine Position bestimmbar ist und die örtliche Verschiebung jedes einzelnen Bildpunktes ist an der Transformation des Referenzbildes ableitbar, weil jeder einzelne Bildpunkt einen nur einmalig vorkommenden Wert, einen nur einmalig vorkommenden numerischen Parameter oder eine nur einmalig vorkommende Farbe aufweist.

Bei der Transformation ist es möglich, dass Teile des Referenzbildes übereinander gelegt werden oder aus dem Bildinhalt verschwinden. In diesem Fall ist die örtliche Verschiebung eines verdeckten oder aus dem Bildinhalt verschobenen Bildinhaltes nicht feststellbar. Der korrespondierende Bildpunkt des zu transformierenden Bildes wird in diesem Fall verworfen. Andererseits kann es vorkommen, dass bei der Transformation Bildpunkte durch Dehnung verdoppelt werden oder gar mehrfach in dem transformierten Bild vorkommen. In diesem Fall wird der Bildpunkt des zu verzerrenden Bildes korrespondierend an jede Stelle kopiert, indem im transformierten Referenzbild der ursprünglich nur einmal vorkommende Wert, der nur einmal vorkommender numerische Parameter oder die nur einmalig vorkommende Farbe gefunden wird.

Um die Transformation einer Vielzahl von Bildern oder Mustern nach einer einmal bestimmten Transformation vereinfacht durchführen zu können, ist in Ausgestaltung des erfindungsgemäßen Verfahrens vorgesehen, dass als Zwischenschritt eine Tabelle aufgebaut wird, in welcher geordnet nach der Position der Bildpunkte mit einem individuellen und nur einmalig vorkommenden numerischen Parameter pro einzelnem Bildpunkt im Referenzbild die Position im transformierten Referenzbild abgelegt ist. Diese Tabelle ist eine 1:n-Tabelle, das bedeutet, dass für jeden einzelnen Bildpunkt im nicht transformierten Referenzbild kein, ein oder mehrere Zeilen vorgesehen sind, um die Transformation durchführen zu können. Der Aufbau einer solchen Tabelle (LookUp-Table) erspart die Suche nach jedem einzelnen Bildpunkt, so dass die Transformation von einer Vielzahl von zu transformierenden Bildern schnell und ohne Suche der einzelnen Bildpunkte durchgeführt werden kann. Nach der Ausgestaltung der Erfindung ist also vorgesehen, dass einmalig eine Tabelle erzeugt wird, in der, geordnet nach der Position im nicht-transformierten Referenz-Bildinhalt, die Position jedes einzelnen Bildpunktes im nicht transformierten Referenz-Bildinhalt der Position im transformierten Referenz-Bildinhalt zugeordnet wird (LookUp-Table), wobei diese Tabelle zur schnellen und reproduzierbaren Transformation von einer Vielzahl von digitalen Bildinhalten verwendet wird.

Da jeder einzelne Bildpunkt im nicht transformierten Referenzbild einen einmalig vorkommenden numerischen Parameter aufweist und daher einzigartig in dem Referenzbild ist, ist die Ordnung der numerischen Parameter im Bild im Prinzip von untergeordneter Bedeutung. Allerdings kann die Ordnung der nur einmalig vorkommenden Parameter eine Redundanz in das Referenzbild einbringen, welche das Auffinden des jeweiligen numerischen Parameters eines Bildpunktes im transformierten Referenzbild vereinfacht. So kann vorgesehen sein, dass die numerischen Parameter der einzelnen Bildpunkte, als Zeilen hintereinandergelegt eine fortlaufende Reihenfolge aufweisen, also bei Zahlenwert 0 oder 1 beginnen und mit der zur Anzahl der im Referenzbild vorhandenen Bildpunkte aufhören. Ein Bild mit 4.000 * 3.000 Punkten = 12 Mio. Bildpunkten würde also die numerischen Parameter 1 bis 12 Mio. aufweisen. Da Verzerrungen nicht vollkommen ungeordnet vorgenommen werden, ist es naheliegend, dass nach der Transformation ein nur einmalig vorkommender, numerischer Zahlenwert, in Nachbarschaft mit weiteren nur einmalig vorkommenden Zahlenwerten verbleibt. Zur schnellen Suche kann also das Gebiet, in dem im transformierten Referenzbild gesucht wird, eingeschränkt werden.

Diese lineare Anordnung der numerischen Parameter erlaubt eine eindeutige Bestimmung der Position des Bildpunktes nur aus seinem Wert. Weist das nicht transformierte Referenzbild n Spalten und m Zeilen auf, so ist der numerische Wert mit seiner Position im Bild wie folgt verknüpft:

Die Position der Zeile Z berechnet sich aus dem ganzzahligen Parameter P: Z = FLOOR[P : n] + 1, wobei die Funktion FLOOR den nächst kleinen Ganzzahlbetrag seines Arguments liefert.

Die Position der Spalte S berechnet sich aus dem ganzzahligen Parameter P: S = MOD[P, n] wobei die Funktion MOD den ganzzahligen Divisionsrest der Division von P : n liefert.

Ein zu transformierendes Bild (erstes Bild) kann nun dadurch transformiert werden, indem aus einem transformierten Referenzbild (zweites Bild) Bildpunkt für Bildpunkt als erster Adresszähler je ein Wert ausgelesen wird. Aus dem ausgelesenen Wert wird die Position im ursprünglich nicht transformierten Referenzbild beispielsweise nach oben stehender Beziehung als zweiter Adresszähler errechnet. Aus dem zu transformierenden Bild (erstes Bild) wird der Bildpunkt der errechneten Position im zweiten Adresszähler herausgelesen und an die Position des ersten Adresszählers in einem dritten Bild abgelegt. Als allgemeine Vorgehensweise wird das Verfahren wie folgt durchgeführt:

Bereitstellen eines Referenz-Bildinhaltes mit einem individuellen und einzigartigem numerischen Parameter pro einzelnem Bildpunkt, Empfangen des Referenz-Bildinhalts, welches mit beliebiger Transformationswirkung an anderer Stelle transformiert wurde, Transformieren eines reproduzierbar zu transformierenden Bildinhaltes, wobei zur Transformation eines jeden einzelnen Bildpunktes des reproduzierbar zu transformierenden Bildinhaltes mit einem ersten Adresszähler Bildpunkt für Bildpunkt der jeweilige numerische Parameter des transformierten Referenzbildes ausgelesen und seine ursprüngliche Position als zweiter Adresszähler in dem nicht transformierten Referenzbild über eine Zuordnungsfunktion bestimmt wird, Auslesen des numerischen Parameters des Bildpunktes des reproduzierbar zu transformierenden Bildinhaltes, von der Position, die im zweiten Adresszähler bestimmt wurde, Ablegen des ausgelesenen numerischen Parameters in einem weiteren Bild an der Stelle, die im ersten Adresszähler bestimmt wurde.

Alternativ zur linearen Anordnung ist es auch möglich, den Wert eines jeden einzelnen Bildpunktes anhand seiner Position zu bestimmen. In Ausgestaltung der Erfindung ist also vorgesehen, dass der nicht-transformierte Referenz-Bildinhalt so aufgebaut ist, dass der individuelle und einzigartige numerische Parameter eines jeden einzelnen Bildpunktes aus der Position ermittelt werden kann, indem entweder eine lineare Abfolge individueller und einzigartiger numerischer Parameter, oder eine aus der Position des Bildpunktes nach einer vorbestimmten Funktion berechneter individueller und einzigartiger numerischer Parameter im nicht-transformierten Referenz-Bildinhalt vorliegt.

In der Regel wird eine Transformation eines ersten Referenzbildes manuell vorgenommen, das bedeutet, eine Szene eines dreidimensionalen Objektes, wie beispielsweise eine Flasche oder eine Tasse, wird über ein digitales Bildverarbeitungsprogramm mit einem einmalig erstellten Logo überlagert. Dabei nutzt der Anwender des digitalen Bildverarbeitungsprogrammes Eingabegeräte wie Maus und Zeichenbrett oder spezielle Eingabegeräte für dreidimensionales Konstruieren, um an virtuellen Ziehpunkten die Transformation durchzuführen. Um das Ergebnis einer Vielzahl von Transformation zu dokumentieren und für weitere, identische Transformationen verfügbar zu machen, kann vorgesehen sein, dass das nicht transformierte Referenzbild als "Ebene" in dem digitalen Bildverarbeitungsprogramm mit dem einmalig und manuell zu verzerrenden Bild verknüpft wird. Sämtliche Transformationen werden sodann auf das zu verzerrende Bild wie auch auf das Referenzbild ausgeübt. Nach der beliebigen Transformation wird die "Ebene" mit dem Referenzbild wieder vom zu verzerrenden Bild getrennt und einzeln abgespeichert und dient als Referenz für die Transformation. Wenn in diesem Fall die numerischen Parameter im Referenzbild mit den einzelnen Bildpunkten einfach fortlaufen, so bildet sich ein unnatürliches und mit im Bild sehr starken Kontrasten ausbildendes Farbmuster, wobei der Verlauf von Helligkeitskanten stark von den Dimensionen des Referenzbildes abhängt. Ist die Kantenlänge des Referenzbildes eine Potenz von zwei oder durch 256 teilbar, so bilden sich vertikale oder horizontale Helligkeitskanten oder Farbkanten im Referenzbild. Anderenfalls liegen Moiree-artige Muster im Referenzbild vor, welche durch plötzliche Farbwechsel gegeben sind. Dabei ist das Farbmodell des eingesetzten digitalen Bildverarbeitungsprogrammes mitursächlich für die Ausbildung der Kanten. Die fortlaufende Ordnung von numerischen Parametern als Bildinhalt ist unnatürlich und daher erzeugt ein solches Referenzbild womöglich bei der Arbeit der manuellen Transformation sehr stark störende und an einen Programmabsturz erinnernde Bilder.

Um diese Effekt abzumildern, können in dem nicht transformierten Referenzbild die einzelnen, nur einmalig vorkommenden numerischen Parameter so geordnet werden, dass jeweils unmittelbar benachbarte, nur einmalig vorkommenden numerischen Werte so gewählt sind, dass sie in dem gewählten Farbmodell RGB oder CMYK die Komplementärfarbe zueinander darstellen oder zumindest, dass die Summe zweier benachbarter, nur einmalig vorkommender Werte stets gleich bleibt oder innerhalb eines kleinen numerischen Intervalls liegt. Dadurch wird der Effekt ausgelöst, dass zwei unmittelbar benachbarte, nur einmalig vorkommende Werte gemeinsam bei der Darstellung im Internet, auf einem Anzeigegerät oder auf einem Druckträger einen etwa grauen Eindruck vermitteln. Ist die gesamte Fläche des Referenzbildes so geordnet, so ergibt sich ein angenähert gleichmäßig grauer Hintergrund, mit dem in einem digitalen Bildverarbeitungsprogramm in Verbindung mit einem natürlichen Bild gut und ohne störende, an einen Computerabsturz erinnernde Bilder zu arbeiten ist. Für eine derartige Ordnung hat sich als vorteilhaft erwiesen, wenn jeweils neun (eine Matrix aus 3*3 Bildpunkten) oder $n^2$, mit n einer kleinen natürlichen Zahl, Bildpunkte in Bezug auf ihren numerischen Inhalt ein sogenanntes magisches Quadrat bilden. Nach der wohlbekannten Theorie der magischen Quadrate gibt es exakt ein magisches Quadrat der Ordnung 3 (3*3 Bildpunkte) und die Anzahl der möglichen magischen Quadrate steigt mit der Zahl n drastisch an. Für das vorliegende Verfahren eignen sich aber besonders magische Quadrate der Ordnung 3 oder der Ordnung 4, weil dann unmittelbar benachbarte, nur einmalig vorkommende numerische Parameter der einzelnen Bildpunkte des Referenzbildes gemeinsam einen Graueindruck beim Betrachter erwecken.

Ein magisches Quadrat der Ordnung 3 hat folgende Werteverteilung:

| 4 | 9 | 2 |
|---|---|---|
| 3 | 5 | 7 |
| 8 | 1 | 6 |

Die Summe entlang jeder Vertikalen, Horizontalen und Diagonalen in diesem magischen Quadrat ergibt jeweils 15. Dieses Modell kann, abhängig vom Farbmodell und dem Gamut der digitalen Anzeige oder des Druckträgers übertragen werden auf Werte, die zueinander Komplementärfarben bilden. In diesem Fall bildet der zentrale Wert (im magischen Quadrat "5") den Wert des Weißpunktes im gewählten Farbmodel (beispielsweise RGB) und dem Gamut der Anzeige (beispielsweise sRGB), welches in Abhängigkeit des Gamma-Wertes, beispielsweise 2,2, einen Weißpunkt bei D65 nach der CIE-Norm aufweist. (Commission internationale de l'éclairage) Auf den Randpunkten befinden sich dann jeweils zwei Werte, die zueinander Komplementärfarben bilden. Dabei ist nicht die Summe der numerischen Werte zweier Bildpunkte mit jeweils einem nur einmal vorkommenden numerischen Parameter konstant wie im magischen Quadrat, sondern diese bilden nach Abbildung im gewählten Gamut zwei Punkte auf einer Linie mit gleichem Abstand vom Weißpunkt. Da beliebig viele Paare von Komplementärfarben gebildet werden können, kann so der Bildinhalt des nicht transformierten Referenzbildes mit lokalen, sich gegenseitig zu neutralem Grau beeinflussenden, nur einmal vorkommenden numerischen Parametern gefüllt werden, so dass sich ein nahezu gleichmäßiger Graueindruck über das Referenzbild ergibt. In dem Beispiel ergeben die numerischen Parameter der Zeilen, nämlich Zellen 4, 9 und 2 gemeinsam einen Eindruck der Farbe des Weißpunktes, weil deren Schwerpunkt mit dem Weißpunkt zusammenfällt. Zellen 3, 5 und 7 gemeinsam einen Eindruck der Farbe des Weißpunktes, Zellen 8, 1, 6 gemeinsam einen Eindruck der Farbe des Weißpunktes, weil deren Schwerpunkt mit dem Weißpunkt zusammenfällt, sowie die Spalten, nämlich Zellen 4, 3 und 8 gemeinsam einen Eindruck der Farbe des Weißpunktes, weil deren Schwerpunkt mit dem Weißpunkt zusammenfällt, Zellen 9, 5 uns 1 gemeinsam einen Eindruck der Farbe des Weißpunktes, Zellen 2, 7 und 6 gemeinsam einen Eindruck der Farbe des Weißpunktes, weil deren Schwerpunkt mit dem Weißpunkt zusammenfällt, sowie die beiden Diagonalen, nämlich Zellen 4, 5 und 6 gemeinsam einen Eindruck der Farbe des Weißpunktes und Zellen 8, 5 und 2 gemeinsam einen Eindruck der Farbe des Weißpunktes. Auf diese Weise lassen sich beliebig viele Zellenkombinationen mit unterschiedlicher Farbe und Helligkeit bilden, die stets in Kombination miteinander gemeinsam einen Eindruck der Farbe des Weißpunktes bilden, so dass sich eine etwa gleichförmig hellgrau bis weiße Fläche als Referenzbild bildet, mit dem visuell einfacher zu arbeiten ist.

In einer alternativen Anordnung können die Positionen der einzelnen nur einmalig vorkommenden Werte im Bild pseudo-zufällig verteilt werden.

Eine zum oben beschriebenen Verfahren korrespondierende Vorrichtung zum Erzeugen von Bildern zur Präsentation im Internet, auf einem Bildschirm oder zum Ausdruck auf einen Druckträger, ist wie folgt aufgebaut: sie weist eine erste Vorrichtung zum Empfang eines Referenz-Bildinhaltes auf, das mit beliebiger Transformationswirkung an anderer Stelle transformiert wurde, und zum Empfang von einer Mehrzahl von zu transformierenden Bildinhalten, wobei eine zweite Vorrichtung die Vielzahl von zu transformierenden Bildinhalten nach dem Verfahren nach den Ansprüchen 1 bis 5 transformiert und eine dritte Vorrichtung im Internet, auf dem Bildschirm und/oder auf dem Druckträger das transformierte ausgibt.

Die Erfindung wird anhand der folgenden Figuren näher erläutert. Es zeigt:

Fig. 1    ein zu transformierendes und ein Referenz-Bild,

Fig. 2    das zu transformierende Bild nach einer beliebigen Transformation,

Fig.3    ein Vergleich der Grenzen des zu transformierenden Bildes mit den Grenzen des ursprünglichen Bildes,

Fig. 4    ein auf ein dreidimensionales Objekt projiziertes Bild,

Fig. 5    ein Referenzbild mit typischen Farb- und Kontrastkanten,

Fig. 6    ein transformiertes Referenzbild,

Fig. 7    eine Abbildung eines virtuellen Farbraums mit eingezeichnetem Dreieck der Farben gleicher Helligkeit,

Fig. 8    ein ternäres RGB-Farbdreieck,

Fig. 9    ein Normvalenzsystem mit eingezeichnetem Gamut eines typischen Farbmonitors und eingezeichneten Farbpunkten,

Fig. 10    ein magisches Quadrat der Ordnung 3 zur Verdeutlichung der Anordnung von Farbwerten im Referenzbild

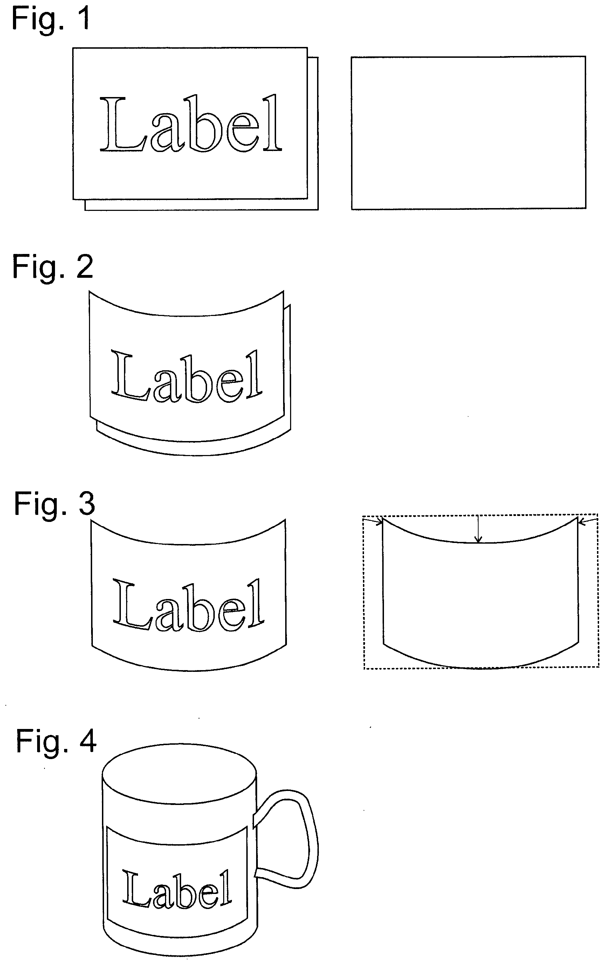

In Figur 1 ist ein zu transformierendes Bild 1 dargestellt, das einen beispielhaften Schriftzug "Label" aufweist. Dieses zu transformierende Bild ist als Ebene eines Bildbearbeitungsprogrammes skizziert, wobei unterhalb des zu transformierenden Bildes 1 ein Referenzbild 2 in einer virtuellen Ebenenanordnung liegt. Das zu transformierende Bild 1 und das Referenzbild 2 werden durch eine Verknüpfung beim Editieren in einem Bildbearbeitungsprogramm in identischer Weise behandelt. Jede Transformation, die auf das zu transformierende Bild 1 angewendet wird, wird auch auf das Referenzbild 2 angewendet. Das nach der vorgenommenen Transformation, hier der dreidimensionalen Auflage des Bildes auf eine zylindrische Oberfläche mit einer Ansicht von etwas oberhalb der Bildmitte ist in Figur 2 dargestellt. Durch die in einem Bildbearbeitungsprogramm verknüpften Bilder des zu transformierenden Bilds und des Referenzbildes weisen beide Bilder eine identische Verzerrung auf. Diese einmalig durchgeführte Transformation soll durch die Erfindung an anderer Stelle reproduziert werden.

Bei der Transformation können sich die Grenzen des Bildinhaltes ändern. In der Regel fallen Teile des Bildinhaltes aus den ursprünglichen Grenzen heraus oder das gesamte Bild verkleinert sich. Beispielhaft hierzu sind Grenzen des nicht transformierten und des transformierten Referenzbildes eingezeichnet. Die eigezeichneten Pfeile A, B und C verdeutlichen für drei Bildpunkte die Verschiebung durch die nur einmalig durchgeführte Transformation innerhalb des Referenzbildes. Das in Figur 3 dargestellte, transformierte Bild ist in Figur 4 wie eine Schablone auf das Abbild einer dreidimensionalen Tasse gelegt. Um weitere Bilder oder Muster in identischer Weise zu transformieren, ist vorgesehen, die Transformation an anderer Stelle mit Hilfe des transformierten Referenzbildes vorzunehmen.

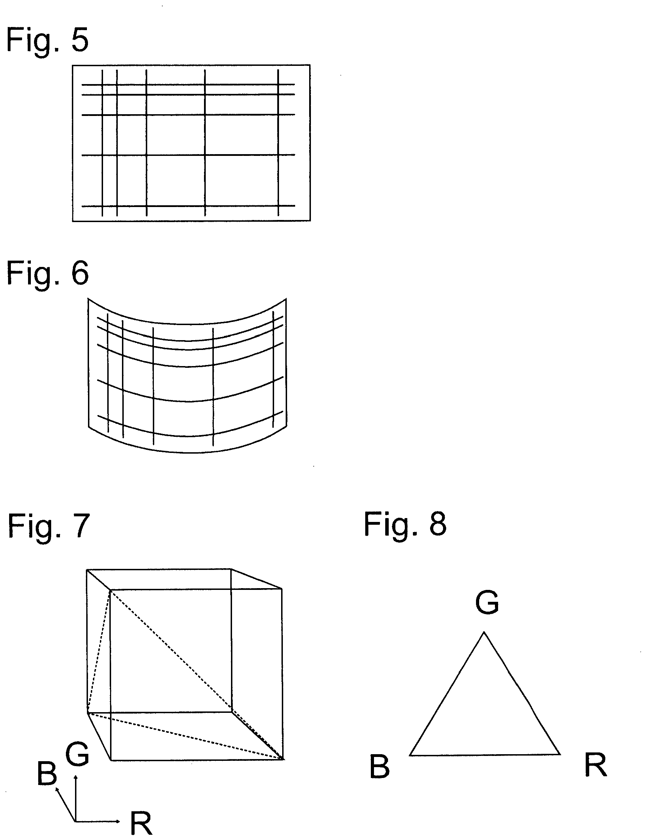

In Figur 5 ist ein Referenzbild dargestellt, in welchem die nur individuellen, nur einmal vorkommenden Bildpunkte linear angeordnet sind. Dadurch entstehen typische Farbverläufe mit kontrastreichen Kanten, wobei der Farbverlauf und die Lage der kontrastreichen Kanten vom gewählten Farbmodell und eingestellten Gamuts des darstellenden Monitors abhängen. Diese kontrastreichen Kanten erleichtern vorliegend das Erkennen der Transformation, die auf das Referenzbild gewirkt hat. Entsprechend des Verlaufes der Grenzen des ursprünglichen, nicht transformierten Referenzbildes haben sich die kontrastreichen Kanten im transformierten Referenzbild verschoben und ihren Verlauf geändert. Um eine Transformation eines weiteren Bildes an anderer Stelle durchzuführen und ohne Kenntnis der exakten Transformationsoperatoren wird ein weiteres nicht transformiertes Bild Bildpunkt für Bildpunkt verändert, wobei jede einzelne Bildpunktverschiebung an der Verschiebung des korrespondierenden Bildpunktes im nicht transformierten Referenzbild abgelesen werden kann, indem die Position des nur einmal vorkommende Parameters des korrespondierenden Bildpunktes in dem transformierten Referenzbild gesucht wird. Um die Suche entbehrlich zu machen, kann die Erzeugung einer Konkordanzliste (Lookup-Table), welche die Position eines numerischen Parameters mit der Position dieses Parameters in dem transformierten Referenzbild verknüpft, vorgenommen werden.

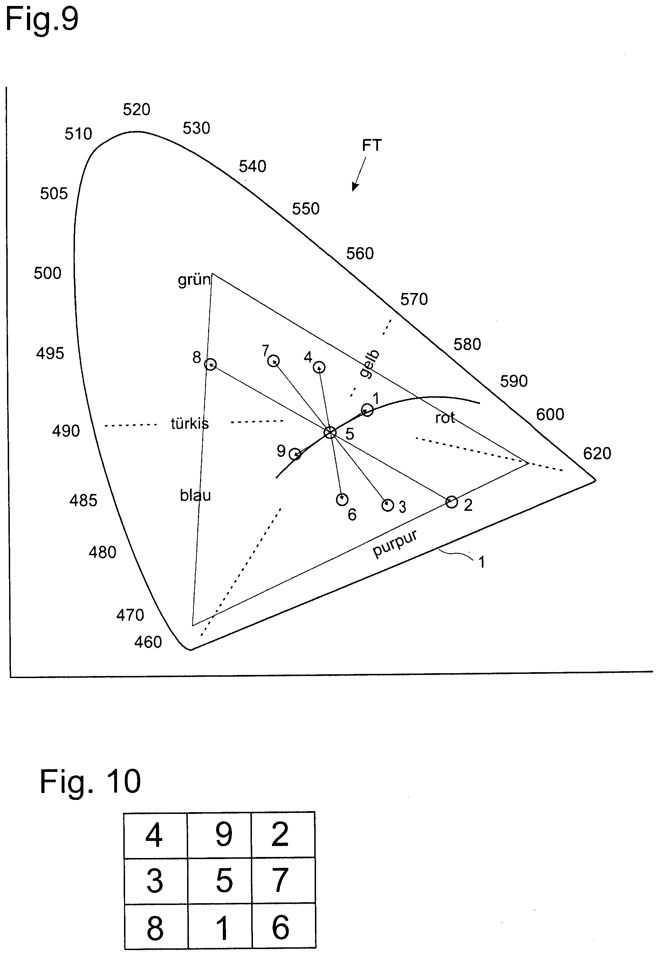

Um das Referenzbild, das beim Arbeiten mit einem Bildverarbeitungsprogramm sichtbar ist, möglichst neutral zu gestalten, ist in Ausgestaltung der Erfindung vorgesehen, Gruppen von Bildpunkten des Referenzbildes jeweils wie ein magisches Quadrat anzuordnen oder alternativ die Position eines jeden einzelnen numerischen Parameters pseudozufällig im Referenzbild zu verteilen. Bei der Anordnung der einzelnen numerischen Parameter nach Maßgabe eines magischen Quadrates werden die numerischen Parameter als Farbwerte aus einem RGB-Dreieck gleicher Helligkeit gewählt. In Figur 7 ist ein virtueller Farbraum abgebildet, der ein kartesisches Koordinatensystem mit drei zueinander senkrechten Achsen für die Farbanteile Rot (R), Grün (G) und Blau (B) darstellt. Das in den Würfel eingezeichnete gleichseitige Dreieck ist in Figur 8 abgebildet und dieses stellt ein ternäres Diagramm der Farbanteile Rot, Grün und Blau dar. Dabeihat die Summe der Farbwerte in jedem Punkt des Farbdreiecks den gleichen Wert. Das RBG-Dreieck aus Figur 8 wird sodann in ein Normvalenzsystem projiziert, das in Figur 9 dargestellt ist. Innerhalb des Normvalenzsystems, das den Gamut des menschlichen Auges darstellt, ist der Gamut eines typischen sRGB-Monitors als Dreieck eingezeichnet. Die Transformation des RGB-Dreiecks mit identischen Summen der Farbanteile in das Normvalenzsystem ist als bekannt vorausgesetzt. Um einzelne Farbwerte (numerische Parameter in dem Referenzbild) zur Anordnung in einer Gruppe aus drei mal drei Punkten zu wählen, wird jeweils ein Punkt in der Mitte der drei mal drei-Gruppe mit einem beliebigen Farbwert aus dem in das Normvalenzsystem transformierten RGB-Dreieck gefüllt. Beispielhaft ist der Wert des mittigen Bildpunktes 5 des magischen Dreiecks in Figur 10 belegt mit einem Farbwert, der auf der Weißkurve im ins Normvalenzsystem transformierten RGB-Dreiecks liegt. Die Farbwerte der Bildpunkte 9 und 1, sowie 3 und 7 und auch 4 und 6 sowie 2 und 8 korrespondieren zu den Farbwerten, die mit den identischen Bezugsziffern im ins Normvalenzsystem transformierten RGB-Dreieck ausgezeichnet sind. Die zuvor erwähnten Bildpunkt-Paare sind jeweils auf Linien im ins Normvalenzsystem transformierten RGB-Dreieck angeordnet, welche als Mittelpunkt den Wert des mittleren Bildpunktes aufweisen. Dadurch, dass die in der drei mal drei Gruppe einander gegenüber liegenden Parameter so gewählt sind, dass sie im Gamut des Farbmonitors Komplementärfarben erzeugen, erscheint die drei mal drei Gruppe als gleichmäßig Graue Fläche. Werden die Werte der mittig liegenden Punkte je einer drei mal drei Gruppe mit Bedacht gewählt, beispielsweise mit Farbwerten gefüllt, die Grau, aber mit unterschiedlicher Helligkeit sind, so lässt sich auf diese Weise ein Bild mit annähernd isotroper Helligkeit und Farbigkeit erzeugen. Ein so präpariertes Referenzbild wirkt bei der einmaligen Transformation in einem Bildverarbeitungsprogramm neutral und stört nicht bei der gelegentlich sehr diffizilen manuellen Transformation des ersten zu transformierenden Bildes, wobei die Transformationsschablone durch das Referenzbild erzeugt wird.

## Patentansprüche

1. Verfahren zur reproduzierbaren Transformation von digitalen Bildinhalten, aufweisend die folgenden Schritte:

    - **Bereitstellen** eines Referenz-Bildinhaltes mit einem individuellen und einzigartigem numerischen Parameter pro einzelnem Bildpunkt,
    - **Empfangen** des Referenz-Bildinhalts, welches mit beliebiger Transformationswirkung an anderer Stelle transformiert wurde,
    - **Transformieren** eines reproduzierbar zu transformierenden Bildinhaltes, wobei
    - zur Transformation eines jeden einzelnen Bildpunktes des zu transformierenden Bildinhaltes
    - der individuelle und einzigartige numerische Parameter des Bildpunktes aus dem nicht transformierten Referenz-Bildinhalt mit gleicher Position wie der des Bildpunktes des zu transformierenden Bildinhaltes ausgelesen und seine Position im transformierten Referenz-Bildinhalt gesucht wird, und
    - der Bildpunkt des zu transformierenden Bildinhaltes an der Stelle eines Ausgangsbildes positioniert wird, wo im transformierten Referenz-Bildinhalt die Position des numerischen Parameters im transformierten Referenz-Bildinhalt gefunden wurde.

2. Verfahren nach Anspruch 1, wobei einmalig eine Tabelle erzeugt wird, in der, geordnet nach der Position im nicht-transformierten Referenz-Bildinhalt, die Position jedes einzelnen Bildpunktes im nicht transformierten Referenz-Bildinhalt der Position im transformierten Referenz-Bildinhalt zugeordnet wird (LookUp-Table), wobei diese Tabelle zur schnellen und reproduzierbaren Transformation von einer Vielzahl von digitalen Bildinhalten verwendet werden kann.

**3.** Verfahren nach Anspruch 1 oder 2,
wobei der nicht-transformierte Referenz-Bildinhalt so aufgebaut ist, dass der individuelle und einzigartige numerische Parameter eines jeden einzelnen Bildpunktes aus der Position ermittelt werden kann, indem entweder

- eine lineare Abfolge individueller und einzigartiger numerischer Parameter, oder
- eine aus der Position des Bildpunktes nach einer vorbestimmten Funktion berechneter individueller und einzigartiger numerischer Parameter

im nicht-transformierten Referenz-Bildinhalt vorliegt.

**4.** Verfahren nach Anspruch 3,
wobei jeweils $n^2$, wobei n eine kleine natürliche Zahl ist, benachbarte, individuelle und einzigartige numerische Parameter ein magisches Quadrat bilden, wobei die Summe auf den Horizontalen, den Vertikalen und den Diagonalen des jeweiligen magischen Quadrates einen einzigen vorbestimmten Wert aufweist, wobei der Wert der für sämtliche magischen Quadrate aus jeweils $n^2$ einzelnen Bildpunkten gebildeten Summen identisch ist, und wobei gegebenenfalls individuelle und einzigartige numerische Parameter am Bildrand als Nachbarn individuelle und einzigartige numerische Parameter vom gegenüberliegenden Bildrand aufweisen.

**5.** Verfahren nach einem der Ansprüche 1 bis 3,
**dadurch gekennzeichnet, dass**
die Position eines jeden einzelnen individuellen und einzigartigen numerische Parameters im Referenzbild pseudo-zufällig gewählt wird.

**6.** Verfahren zur reproduzierbaren Transformation von digitalen Bildinhalten, aufweisend die folgenden Schritte:

- **Bereitstellen** eines Referenz-Bildinhaltes mit einem individuellen und einzigartigem numerischen Parameter pro einzelnem Bildpunkt,
- **Empfangen** des Referenz-Bildinhalts, welches mit beliebiger Transformationswirkung an anderer Stelle transformiert wurde,
- **Transformieren** eines reproduzierbar zu transformierenden Bildinhaltes, wobei
- zur Transformation eines jeden einzelnen Bildpunktes des zu transformierenden Bildinhaltes
- mit einem ersten Adresszähler Bildpunkt für Bildpunkt der jeweilige numerische Parameter des transformierten Referenzbildes ausgelesen und seine ursprüngliche Position, für einen zweiten Adresszähler, in dem nicht transformierten Referenzbild über eine Zuordnungsfunktion bestimmt wird,

- der numerische Parameter des Bildpunktes des zu transformierenden Bildinhaltes von der Position, die im zweiten Adresszähler bestimmt wurde, ausgelesen wird, und
- der ausgelesene numerische Parameter in einem Ausgangsbild an der Stelle, die im ersten Adresszähler bestimmt wurde, abgelegt wird.

**7.** Anordnung zum Erzeugen von Bildern zur Präsentation im Internet, auf einem Bildschirm oder zum Ausdruck auf einen Druckträger, welche eine erste Vorrichtung aufweist
zum Empfang von einem Referenz-Bild, das mit beliebiger Transformationswirkung an anderer Stelle transformiert wurde, und
zum Empfang von einer Mehrzahl von zu transformierenden Bildinhalten, wobei
eine zweite Vorrichtung die Mehrzahl von zu transformierenden Bildinhalten nach dem Verfahren nach einem der Ansprüche 1 bis 6 transformiert und eine dritte Vorrichtung das transformierte Bild im Internet, auf dem Bildschirm und/oder auf dem Druckträger ausgibt.

**Claims**

**1.** A method for the reproducible transformation of digital image contents, having the following steps:

- providing a reference image content with an individual and unique numerical parameter for each individual pixel,
- receiving the reference image content, which has been transformed with an arbitrary transformation effect at another location,
- transforming an image content, which is to be transformed in a reproducible manner, wherein
- for the transformation of each individual pixel of the image content to be transformed
- the individual and unique numerical parameters of the pixel from the untransformed reference image content with the same position as that of the pixel of the image content to be transformed is read out and the position thereof in the transformed reference image content is searched for, and
- the pixel of the image content to be transformed is positioned at the location of an original image, where in the transformed reference image content, the position of the numerical parameter was found in the transformed reference image content.

**2.** The method according to Claim 1, wherein
once a table is created, in which the position of each individual pixel in the untransformed reference image content is assigned - sorted by the position in the untransformed reference image content - to the position in the untransformed reference image content (lookup table), wherein this table can be used for fast and reproducible transformation of a multiplicity of digital image contents.

3. The method according to Claim 1 or 2, wherein the untransformed reference image content is structured such that the individual and unique numerical parameter of each individual pixel can be determined from the position, in that either

    - a linear sequence of individual and unique numerical parameters, or
    - an individual and unique numerical parameter calculated from the position of the pixel in accordance with a predetermined function is present in the untransformed reference image content.

4. The method according to Claim 3, wherein in each case, $n^2$, where n is a small natural number, neighbouring individual and unique numerical parameters form a magic square, wherein the sum on the horizontals, the verticals and the diagonals of the respective magic square has a single predetermined value, wherein the value of the sums formed for all magic squares from in each case $n^2$ individual pixels is identical, and wherein if appropriate, individual and unique numerical parameters at the image edge have individual and unique numerical parameters from the opposite image edge as neighbours.

5. The method according to one of Claims 1 to 3, **characterized in that** the position of each individual and unique numerical parameter in the reference image is chosen pseudo-randomly.

6. A method for the reproducible transformation of digital image contents, having the following steps:

    - providing a reference image content with an individual and unique numerical parameter for each individual pixel,
    - receiving the reference image content, which has been transformed with an arbitrary transformation effect at another location,
    - transforming an image content, which is to be transformed in a reproducible manner, wherein
    - for the transformation of each individual pixel of the image content to be transformed
    - using an address counter, the respective numerical parameter of the transformed reference image is read out pixel by pixel and the original position thereof in the untransformed reference image is determined by means of an assignment function, for a second address counter,
    - the numerical parameter of the pixel of the image content to be transformed is read out from the position, which was determined in the second address counter, and
    - the numerical parameter which was read out is rendered in an original image at the location, which was determined in the first address counter.

7. An arrangement for creating images for presentation on the Internet, on a screen or for printing on a print medium,
which has a first device
for receiving a reference image, which was transformed with an arbitrary transformation effect at a different location, and
for receiving a plurality of image contents to be transformed, wherein
a second device transforms the plurality of image contents to be transformed according to the method according to one of Claims 1 to 6, and
a third device outputs the transformed image on the Internet, on the screen and/or on the print medium.

**Revendications**

1. Procédé destiné à la transformation reproductible de contenus d'image numériques comportant les étapes suivantes :

    - fourniture d'un contenu d'image de référence avec un paramètre numérique individuel et unique pour point d'image individuel,
    - réception du contenu d'image de référence, lequel a été transformé avec un effet de transformation quelconque à un autre emplacement,
    - transformation d'un contenu d'image reproductible à transformer,
    - pour la transformation de chaque point d'image individuel du contenu d'image à transformer,
    - le paramètre numérique individuel et unique du point d'image étant choisi à partir du contenu d'image de référence non transformé avec une position identique à celle du point d'image du contenu d'image à transformer et sa position étant recherchée dans le contenu d'image de référence transformé, et
    - le point d'image du contenu d'image à transformer étant positionné à l'emplacement d'une image initiale, où la position du paramètre numérique dans le contenu d'image de référence transformé a été trouvée dans le contenu d'image de référence transformé.

2. Procédé selon la revendication 1, une table étant uniquement générée dans laquelle, disposée d'après la position dans le contenu d'image de référence non transformé, la position de chaque point d'image individuel dans le contenu d'image de référence non transformé étant affectée à la position dans le contenu d'image transformé (table de recherche), cette table pouvant être utilisée pour une transformation rapide et reproductible d'une pluralité de contenus d'image numériques.

**3.** Procédé selon la revendication 1 ou 2, le contenu d'image de référence non transformé étant structuré de telle manière que le paramètre numérique individuel et unique de chaque point d'image individuel peut être déterminé à partir de la position dans laquelle il y a dans le contenu d'image de référence non transformé, soit

- une suite linéaire de paramètres numériques individuels et uniques, soit
- un paramètre numérique individuel et unique calculé à partir de la position du point d'image selon une fonction prédéterminée.

**4.** Procédé selon la revendication 3, respectivement $n^2$, n'étant un petit nombre entier naturel, des paramètres numériques, individuels et uniques voisins formant un carré magique, la somme comportant sur les horizontales, les verticales et les diagonales du carré magique respectif une valeur unique prédéterminée, la valeur des sommes formées pour tous les carrés magiques à partir respectivement des points d'image individuels $n^2$ étant identique et le cas échéant des paramètres numériques individuels et uniques comportant en bord d'image en tant que voisin des paramètres numériques individuels et uniques du bord d'image opposé.

**5.** Procédé selon l'une quelconque des revendications 1 à 3, **caractérisé en ce que** la position de chaque paramètre numérique individuel et unique est choisie de manière pseudo-fortuite dans l'image de référence.

**6.** Procédé destiné à la transformation reproductible de contenus d'image numériques comportant les étapes suivantes :

- fourniture d'un contenu d'image de référence avec un paramètre numérique individuel et unique pour point d'image individuel,
- réception du contenu d'image de référence, lequel a été transformé avec un effet de transformation quelconque à un autre emplacement,
- transformation d'un contenu d'image reproductible à transformer,
- pour la transformation de chaque point d'image individuel du contenu d'image à transformer,
- avec un premier compteur d'adresses point d'image pour point d'image, le paramètre numérique respectif de l'image de référence transformée étant choisi et sa position originale étant déterminée pour un deuxième compteur d'adresses dans l'image de référence non transformée par une fonction d'attribution,
- le paramètre numérique du point d'image du contenu d'image à transformer étant choisi à partir de la position qui a été déterminée dans le deuxième compteur d'adresses, et
- le paramètre numérique choisi étant déposé dans une image initiale à l'emplacement qui a été déterminé dans le premier compteur d'adresses.

**7.** Agencement destiné à générer des images pour la présentation dans Internet sur un écran ou pour impression sur un support d'impression, lequel comporte un premier dispositif pour recevoir une image de référence, qui a été transformée avec un effet de transformation quelconque à un autre emplacement, et pour recevoir une pluralité de contenus d'image à transformer, un deuxième dispositif transformant la pluralité de contenus d'image à transformer d'après le procédé selon l'une quelconque des revendications 1 à 6 et un troisième dispositif éditant l'image transformée dans Internet sur l'écran et/ou sur le support d'impression.

## Fig. 1

Label

## Fig. 2

Label

## Fig. 3

Label

## Fig. 4

Label

Fig. 5

Fig. 6

Fig. 7

Fig. 8

# Fig.9

# Fig. 10

| 4 | 9 | 2 |
|---|---|---|
| 3 | 5 | 7 |
| 8 | 1 | 6 |

**IN DER BESCHREIBUNG AUFGEFÜHRTE DOKUMENTE**

**In der Beschreibung aufgeführte Patentdokumente**

- US 2009154822 A1
- US 2008062164 A1